(19) Europäisches Patentamt
European Patent Office
Office européen des brevets

(11) Publication number: **0 219 481 B1**

(12) **EUROPEAN PATENT SPECIFICATION**

(45) Date of publication of patent specification: **03.08.94**

(51) Int. Cl.⁵: **C09K 19/02**, C09K 19/46, C09K 19/20, G02F 1/137

(21) Application number: **86850353.3**

(22) Date of filing: **14.10.86**

The file contains technical information submitted after the application was filed and not included in this specification

(54) **Fast-switching low-temperature ferroelectric liquid crystal mixtures.**

(30) Priority: **14.10.85 SE 8504763**

(43) Date of publication of application: **22.04.87 Bulletin 87/17**

(45) Publication of the grant of the patent: **03.08.94 Bulletin 94/31**

(84) Designated Contracting States: **CH DE FR GB LI NL SE**

(56) References cited:
**EP-A- 0 136 725**
**EP-A- 0 194 659**
**US-A- 4 556 727**

**MOLECULAR CRYSTALS AND LIOUID CRYSTAL, vol. 110, nos. 1-4, 1984, pages 175-203, Gordon and Breach, Science Publishers, Inc., New York, US; J.W. GOODBY et al.: "Ferroelectric liquid crystals - structure and design"**

**PATENT ABSTRACTS OF JAPAN, vol. 10, no. 383 (C-393)[2440], 23rd December 1986; & JP-A-61 174 294**

(73) Proprietor: **FLC Innovation AB**
**Chalmers Teknikpark**
**S-412 88 Göteborg(SE)**

(72) Inventor: **Kuczynski, Wojciech**
**Landalagangen 13**
**S-41130 Göteborg(SE)**
Inventor: **Stebler, Bengt**
**Carlbergsgatan 19**
**S-41251 Göteborg(SE)**
Inventor: **Lagerwall, Sven T.**
**Snackvägen 30 B**
**S-41475 Göteborg(SE)**
Inventor: **Wahl, Jürgen**
**Kronthaler Strasse 36**
**D-6232 Bad Soden 2(DE)**
Inventor: **Skarp, Kent**
**Bräckavägen 45**
**S-43700 Lindome(SE)**

(74) Representative: **Grennberg, Erik Bertil et al**
**H. ALBIHNS PATENTBYRA AB**
**P.O. Box 3137**
**S-103 62 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 219 481 B1

**JOURNAL OF THE AMERICAN CHEMICAL SOCIETY, vol 108, no. 17, 20th August 1986, pages 5210-5221, American Chemical Society; D.M. WALBA et al.: "Design and synthesis of a new ferroelectric liquid crystal family. Liquid crystals containing a nonracemic 2-alkoxy-1-propoxy unit"**

## Description

Surface-stabilized ferroelectric liquid crystals (SSFLC) are helix-free tilted chiral smectics which are made polarisable due to a "book-shelf" geometry arrangement (layers standing up perpendicular to the glass-plates of the electrooptic cell) under the condition that the distance between the confining plates is very small. Any non-compensated helix which may be present in the bulk ground state is here unwound as a consequence of shape and scale factors. These also lead to a natural bistability normally including two, sometimes more stabilized states, being more or less pronounced as this depends on the substance or substance mixture used, the surface coating and distance between plates. A more detailed discussion of these phenomena can be found in US Patent No. 4,367,924 from 1983 (filing date Jan 8, 1980) and US Patent No. 4,563,059 from Jan 1, 1986 (filing date July 7, 1983). During the last few years notable achievements have been made in the physics and technology of the SSFLC devices. The multiplexibility, taking advantage of the bistable properties, has been demonstrated and thus confirmed the applicability to large screens handling high density information in real time. Thin cells with a typical thickness of 1 to 3 $\mu$m are capable of fast and bistable operation, with voltages of 5 to 50 volts giving corresponding response times in the range of 1 to 50 $\mu$s. These characteristics are typical for certain high-temperature materials, operating at about 60 to 80 degrees Celsius. In order to be useful in devices, however, correspondingly fast liquid crystals should be developed, which operate at ambient temperature. A number of room-temperature ferroelectric mixtures have been reported in the European Patent Application 0110299 (filing date 22.11.1983) by Isogai et al, Hitachi Ltd. Although these mixtures were designated as fast-switching, the response time is still about 1 millisecond or longer. In this application we report on novel mixtures with response time of typically 20-50 microseconds at room-temperature.

Three kinds of important problem have to be distinguished in designing ferroelectric liquid crystal materials. First there is the task of developing stable, that is, non-monotropic, C* phases, or eventually also more ordered tilted smectic phases, which are broad-band and centered around ambient temperature. The substances have to have a high electric resistivity and be of high chemical stability; especially they have to be resistant to moisture (which essentially rules out Schiff bases) and to UV-light (which leads to a certain care e.g. when using cinnamates). The second task is to, choose compounds and mixtures that are compatible with available surface coatings giving the desired boundary condition of the molecular axis, normally parallel, or nearly so, to the confining surface.

At the present stage this problem can only be investigated by trial and error, and whereas several classes of chemical compounds, especially phenyl pyrimidine compounds, show excellent affinity for the mentioned boundary condition in combination with a wide variety of precoatings just as they do in the nematic phase, other substance classes have been found which rather show the opposite tendency of never aligning themselves to the "book-shelf" geometry, regardless of coating materials and even application of mechanical shear. The third task is the optimization of material parameters like polarization, viscosity, birefringence, dielectric anisotropy, tilt and pitch. In this connection it is of special importance to recognize that the sign and value of dielectric anisotropy is of a striking relevance to the alignment problem and to the general problem of matrix-addressing an SSFLC cell.

From Mol. Cryst. Liq. Cryst. (1984) pages 175-302 ( Goodby et al), and from EP-A 136 725 and EP-A 194 659, it is known to compensate the helical pitch by mixing substances of opposite pitch, and to thereby select them such that their polarizations do not counteract each other. This may be seen as the starting point of the present invention, which has the object of designating a fast-acting ferroelectric liquid crystal mixture, given the said controlling condidion. According to the present invention, this is accomplished by means of the features recited in the claims.

In the high-field limit, the relation between the response time $\tau$ and the applied electric field E is given by

$$\tau^{-1} = (P/\gamma)E$$

from which can be seen that the quantity $P/\gamma$, the polarization over the rotational viscosity, acts as a factor of merit. Of two mixtures with the same $P/\gamma$ value, and similar further properties, the one with the lower value of P has the important advantage of drawing less power when in operation. For our compounds P lies in the range of 1-30 nC $cm^{-2}$ , which is not exceedingly high. They have, however, fairly low viscosities, contributing to the high-speed performance.

Besides being fast-switching at low temperature, the substance compositions for the basic mixtures presented below respond to the following demands:

1. They are non-coloured.

2. The C* phase is termodynamically stable.
3. The upper temperature limit is reasonably high, 45-55 °C.
4. The lower temperature limit is reasonably low, 15-20 °C, highly supercoolable, and easily extendable down to lower temperatures by small additions of other substances. (Many such substances are available, i.e. the Merck mixtures ZLI - 3079 and ZLI - 3080 which are not convenient themselves for switching, but may be useful additives in the per cent range.) The first step of extension is, however, to proceed to ternary mixtures, examples of which are given below.
5. They have $\Delta \epsilon < 0$, but not too large in magnitude.
6. They show good aligning properties, e.g. with polyimide and silane coatings.
7. They have a long helical pitch Z, $Z \gg d$ where d is the cell spacing of 1-3 $\mu$m, whereas for the pure compounds Z is typically of the same order as d.

More specifically, care has been taken to determine not only Z, but also its sign, + or -, +Z designating a right-hand helix in space, and -Z, designating a left-hand helix. Moreover, the sign of P has been measured, according to the convention given in N.A. Clark and S.T.Lagerwall Ferroelectrics 59, 25 (1984); thus the sign pair (P,Z) (+/-, +/-) has been determined for all compounds used, which is important for compensating the twisting power of the C* phase without letting one of the compounds' polarization counteracting that of the others in the mixture.

The used compounds are

(1)

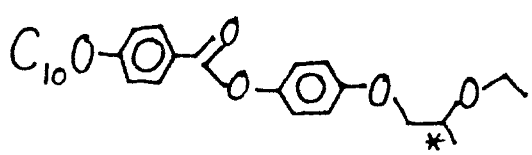

analogous compounds with n = 8 and 12 instead of n = 10 showing similar values. A similar behaviour is also shown when the ethoxy group at the chiral end is replaced by a propoxy group. Compounds of this kind have been synthesized by D.M.Walba, described in US Patent Application, serial no. 632140. For n = 10 the phase transitions are(in degrees celsius)

X 38 ($S_3$ 10 C* 28) A 42 L

Here, as in the following, X,S,C,A,N and L stand for crystalline, smectic (with no further designation), smectic C, smectic A, nematic, and (isotropic) liquid phase. An asterisk denotes a chiral-asymmetric phase and a parenthesis indicates a monotropic (metastable) phase;

(2)

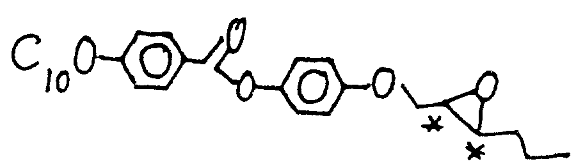

(synthesis D.M.Walba, private communication; US Patent Application filed) with phase transitions

X 75 ($S_3$ 57) C* 80 A 81 N* 97 L

For the compounds (3) to (11) the transition temperatures are given In the following, below each formula

(3)

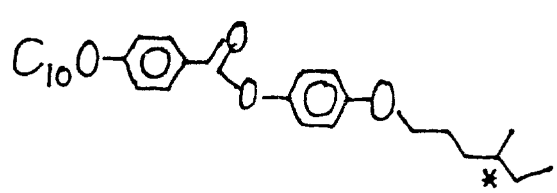

X 35 ($S_3$ 30) C* 70 A 73 N* 74 L

(4)

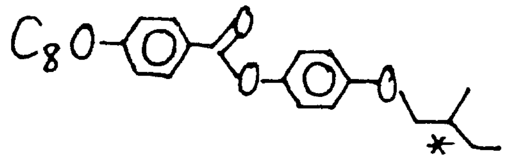

X 48 ($S_4$ 12 $S_3$ 21 C* 43) A 59 L

(5)

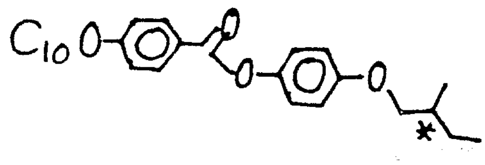

X 45 ($S_4$ 21 $S_3$ 27) C* 47 A 64 L

(6)

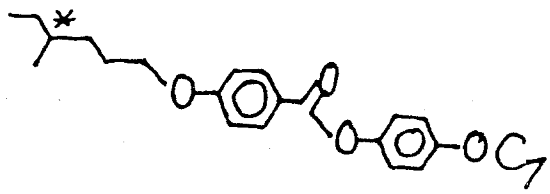

X 36 C* 47 N* 63 L

(7)

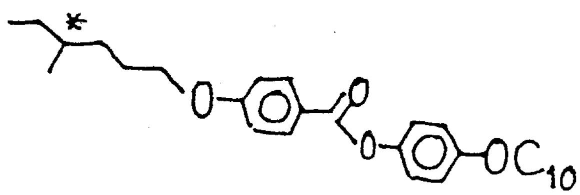

X 38 C* 51 N* 66 L

(8)

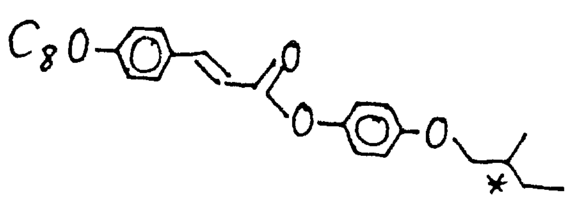

X 84 C* 86 A 99 N* 105 L

(9)

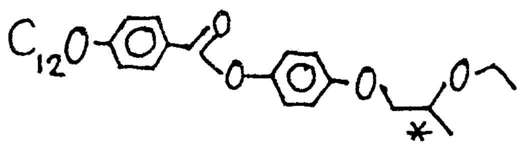

X 44 ($S_3$ 18 C* 35) A 45 L

(10)

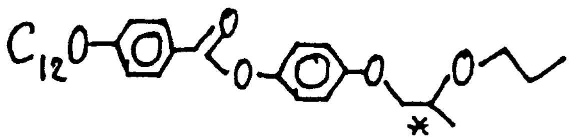

X 38 (C* 37) A 43 L

(11)

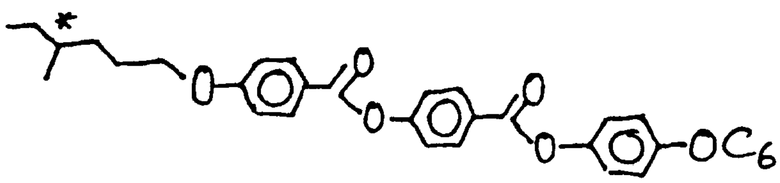

X 95 C* 115 N* 185 L

The synthesis of compounds (3) to (7) has been described by P.Keller in Ferroelectrics 58, 1 (1984); The synthesis of (8) by T.Leslie in Ferroelectrics 58, 9 (1984).

In the following Table approximate values of helical pitch and of spontaneous polarization are given as well as the sign pair polarization-helicity for S-compounds like S-4-( 2-ethoxy propoxy) phenyl 4'-decyloxy benzoate, S-4-(2,3 epoxy hexyloxy) phenyl 4'-decyloxy benzoate, and so on

| Substance | Z (micrometer) | Sign P/signZ | Polarization nC/cm$^2$ |
|---|---|---|---|
| (1) | < 3 | +/- | + 10 |
| (2) | 3 | +/+ | + 40 |
| (3) | 5 | -/- | - 0.1 |
| (4) | 3 | -/- | - 2 |
| (5) | 10 | -/- | - 1 |
| (6) | 5 | -/- | |
| (7) | 5 | -/- | |
| (8) | 3 | +/- | |
| (9) | < 3 | +/- | |
| (10) | | +/- | |

Fast-switching mixtures are embodied in the examples given in the following. An asterisk atteched to a number indicates the optical antipode of the corresponding substance

Example 1. Binary mixture of 40% - 50% of (1) with 60% - 50% of (3*), preferably 45% of (1) and 55% of (3*), which stabilizes the monotropic C* phase of (1), within temperatures range 20 (further supercoolable) to 55 degrees celsius, at the same time as unwinding the helix with no corresponding counteractivity of the polarization.

Example 2. Binary mixture of 70% - 60% (4*) with 30% -40% of (8), stabilizing and broadening the monotropic C phase of (8) with a corresponding polarization helix optimization as in example 1; preferably 60% of (4*) and 40% of (8) giving a C* range from 35 to 55 degrees celsius.

Example 3. Binary mixture of 30% - 50% of (1) with 70% - 50% of (6*), preferably 45% of (1) and 55% of (6*) giving a C* range from below 20 to 35 degrees celsius and with analogous P-Z optimization as in the foregoing examples.

Example 4. Binary mixture of 40% - 60% of (9) with 60% - 40% of (3*), preferably with 50% of (9) and 50% of C* with properties similar to that of example 1.

Example 5. Binary mixture of (2) and (9), lowering the operating temperature of 2 under simultaneous helix unwinding, in proportion 30% - 60% to 70% - 40%, preferably 45% of (2) and 55% of (9) giving a C* range from 55 degrees celsius down to room-temperature.

Example 6. Binary mixture of (8) and (6*), in proportion 20% -40% to 80% - 60%, preferably 30% of (8) and 70% of (6*), giving helix unwinding and a useful C* range from 55 degrees celsius down to room-temperature.

Example 7. Binary mixture of (4) and (6), in proportion about 60% - 30% to 40% - 70%, preferably about 50% - 50% with C*range from 45 degrees celsius to below room-temperature. Addition of a third substance is here required to enlarge the pitch.

Example 8. Binary mixture of (4) and (3) in proportion about 20% - 60% to 80% - 40%, preferably about 45% of (4) and 55% of (3), with C* from 28 to 58 degrees celsius.

Example 9. Binary mixture of (1) and (4*) in proportion 60% - 50% to 40% - 50%, preferably with 55% of (1) and 45% of (4*) giving a C* range from 28 degrees celsius to below room-temperature.

Example 10. Binary mixture of (5) and (6) in proportion 30% - 50%, to 70% - 50%, preferably about 45% of (5) and 55% of (6), giving a C* phase from 53 degrees celsius down to below room-temperature.

Example 11. Mixtures in which (7) has replaced (6) behave very similar to the original ones. The same is true if (5) replaces (4). Simultaneous use of (6) and (7), as of (4) and (5), is slightly more efficient for phase-broadening than the one-substance addition.

Example 12. Ternary mixture of the base mixture in example 9 with about 30% of (6*). This mixture could not be brought to crystalize even kept at minus 25 degrees celsius for long period. With (1), (4*) and (6*) in ratios 35:33:32 the C*- A transition lies at 40 degrees, A - N* at 45 and N* - L at 51 degrees celsius.

Example 13. Ternary mixture of the base mixture in example 1 with about 10% - 30% of (6*) to achieve a similar low-temperature stability.

Example 14. Ternary mixture of (10), (4*) and (6*) in proportion of about 30:40:30. For the ratio 30:39:31, the stable C* range is between 5 and 39 degrees celsius; with a - N* at 52 and clearing point at 54 degrees celsius.

Example 15. Ternary mixture of (4*) with about equal proportions of the base mixture in Example 6. For (4*), (6*) and (8) in the ratios 50:17:33, the C* phase is stable from 17 to 58 degrees celsius, with A - N* at 68 and clearing point at 75 degrees celsius.

Example 16. Ternary mixture of (10), (8) and (6*). For ratios of 30:32:38, the C* phase is stable from 15 to 57 °C with A - N* at 63° and clearing point at 70 °C.

Example 17. Quarternary mixture of (10), (7), (4) and (11). For ratios of 32:30:27:11 the stable C* range is between 13 and 51 °C with A - N* at 56 and clearing point at 63°C.

Example 18. Quarternary mixture of (11*) together with the ternary mixture of Example 14. For ratios (10), (4*), (6*) and (11*), or (10*), (4), (6) and (11) equal to 25:32:26:17 the stable C* range is from 5 to 53 °C. The 53 degree transition is C*-A. At 61 °C A goes to N* and the clearing point lies at 78 °C.

Example 19. Many quarternary mixtures with 3-ring systems give similar behaviour, with both C* - A and C* - N* transitions. Several of the binary basic mixtures serve well for make quarternary ones, e.g. the mixture in example 1 with the mixture in example 5.

Example 20. Mixtures according to the described principles where all substances are simultaneously replaced by their optical antipodes.

## Claims

**1.** A fast-switching ferroelectric liquid crystal mixture with a low working temperature in a C* phase, including constituents having their optical antipodes chosen such that individual constituents have oposite helix signs but equal electric polarization signs, in order to essentially unwind their twists while conserving a unique direction for the rotational bias of electric polarization, **characterized** in that the constituents are selected from a group consisting of:

(1)

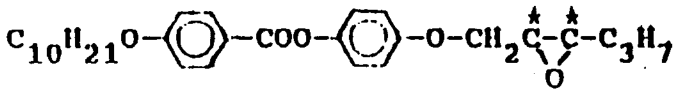 ;

(2)

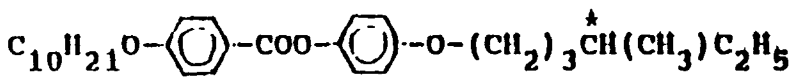 ;

(3)

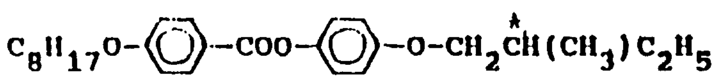 ;

(4)

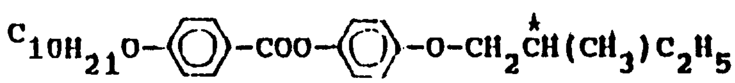 ;

(5)

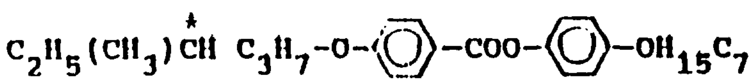 ;

(6)

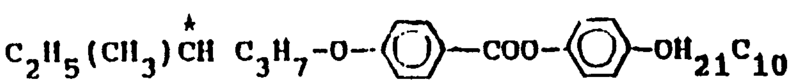 ;

(7)

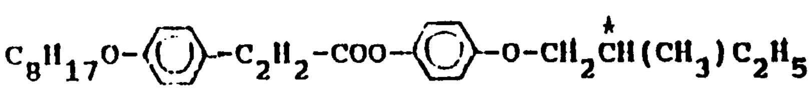 ;

(8)

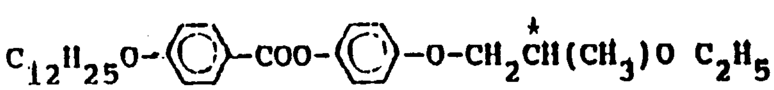 ;

(9)

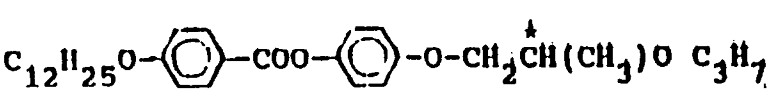 ;

and

(10)

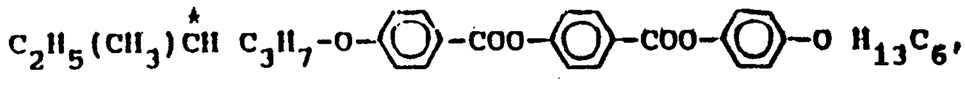

in a thermodynamically stable C* mixture with other compounds and with themselves.

**Patentansprüche**

1. Schnellschaltende ferroelektrische Flüssigkristallmischung mit einer niedrigen Arbeitstemperatur bei einer C*-Phase, mit Bestandteilen, deren optische Antipoden so gewählt sind, daß einzelne Bestandteile entgegengesetzte Helix-Vorzeichen, aber gleiche elektrische Polarisationsvorzeichen haben, um ihre Windungen weitgehend zu entwinden, aber eine einzige Richtung für die Rotationsvorspannung der elektrischen Polarisation beizubehalten, dadurch gekennzeichnet, daß die Bestandteile aus einer Gruppe ausgewählt sind, die besteht aus

(1)

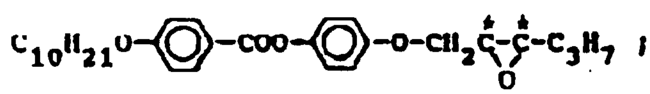

(2)

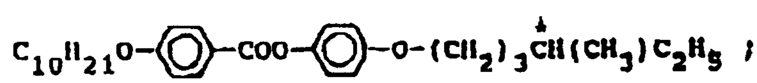

(3)

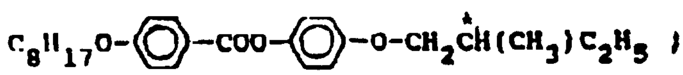

(4)

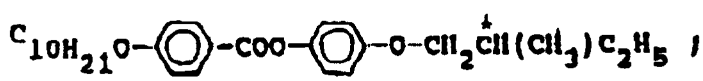

(5)

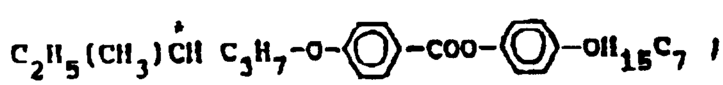

(6)

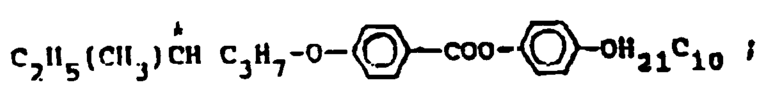

(7)

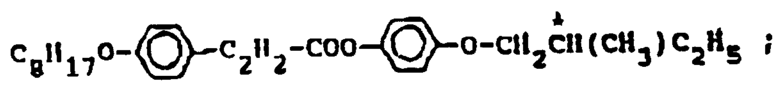

(8)

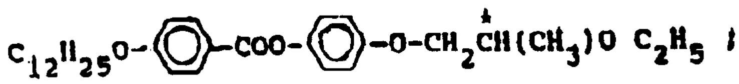

(9)

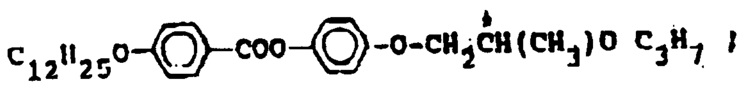

and
(10)

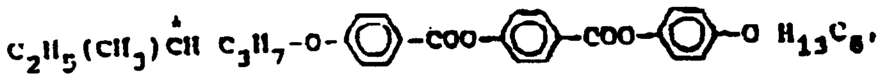

in einer thermodynamisch stabilen C*-Mischung mit anderen Verbindungen und mit sich selbst.

**Revendications**

**1.** Mélange cristallin liquide ferroélectrique à commutation rapide avec une basse température de travail dans une phase C*, comprenant des constituants ayant leurs antipodes optiques choisis de sorte que les constituants individuels aient des signes d'hélice opposés mais des signes de polarisation électrique identiques, afin de pratiquement dérouler leurs torsions tandis qu'une direction unique pour la déviation rotationnelle de polarisation électrique est conservée, caractérisé en ce que les constituants sont sélectionnés parmi le groupe constitué de :

(1)

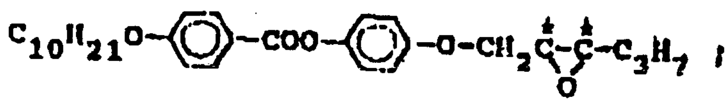

(2)

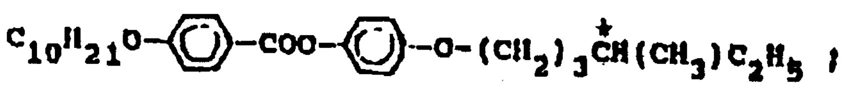

(3)

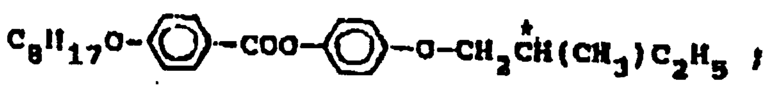

(4)

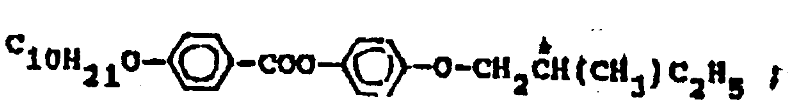

(5)

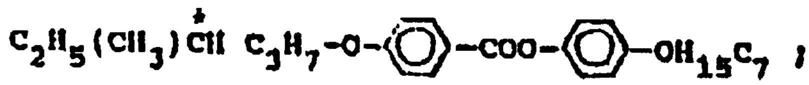

(6)

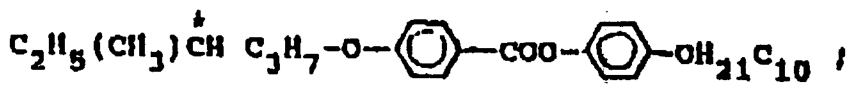

(7)

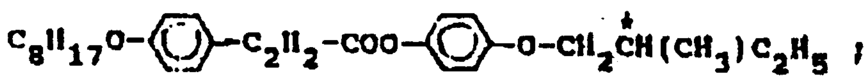

(8)

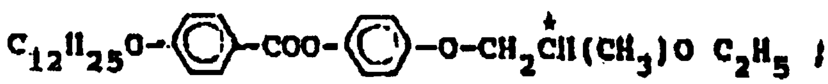

(9)

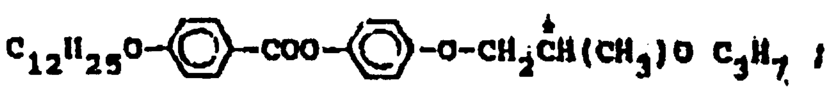

et
(10)

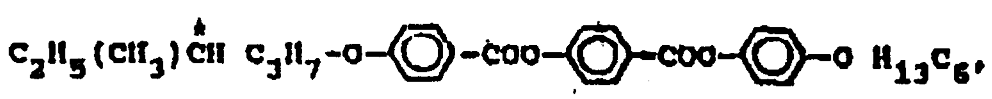

en un mélange C* thermodynamiquement stable avec d'autres composés et avec eux-mêmes.